# EUROPEAN PATENT APPLICATION

(11) **EP 1 864 639 A1**
(43) Date of publication of application: **12.12.2007**
(21) Application number: 06730363.6
(22) Date of filing: 29.03.2006
(51) Int. Cl.: A61H 7/00, F16K 31/06

(54) **PNEUMATIC BODY ACTING APPARATUS**

(30) Priority: 31.03.2005 JP 2005103081; 01.07.2005 JP 2005193758
(71) Applicant: NITTO KOHKI CO., LTD., Ohta-ku, Tokyo 146-8555 (JP)
(72) Inventor: NAKAO, Haruki, c/o NITTO KOHKI CO., LTD., Tokyo 1468555 (JP)
(74) Representative: Wagner & Geyer
(86) International application number: PCT/JP2006/306415
(87) International publication number: WO 2006/106708

(57) **Abstract**

A pneumatic body treating device 12 of a pneumatic body treating apparatus includes a plurality of airtight chambers 16, 18, 20, and 22 to and from which pressurized air is supplied and discharged, a hose 21 having a connecting end connectable to a pressurized air source 148 of a pneumatic body treating apparatus body 14, and a plurality of electromagnetic valves 24, 26, 28, and 30 which are connected between the hose and the airtight chambers 16, 18, 20, and 22, respectively, and which supply pressurized air from the hose 21 to the corresponding airtight chambers and discharge the pressurized air from the corresponding airtight chambers. With this arrangement, it is possible to reduce the number of connecting hoses for supplying pressurized air to the pneumatic body treating device which, when used, is worn around the upper limbs and the lower limbs.

## Description

### TECHNICAL FIELD:

The present invention relates to a pneumatic body treating device which is abutted against a human body to make an effect on the human body while being expanded and contracted by supplying and discharging pressurized air to and from the pneumatic body treating device. More particularly, the present invention relates to a pneumatic massage apparatus having a pneumatic massage device which is worn around the upper and lower limbs of a human or laid under a recumbent human body to provide a massaging effect while being expanded and contracted by supplying and discharging pressurized air to and from the pneumatic massage device, and a massage apparatus body which has a pressurized air source (an air pump) for the pneumatic massage device and is placed adjacent to a user of the pneumatic massage device.

### BACKGROUND ART:

Generally, in a pneumatic massage apparatus, a pneumatic massage device has a plurality of airtight chambers each of which is expanded and contracted by supplying and discharging pressurized air to and from each airtight chamber, and a massage apparatus body has the same number of three-way electromagnetic valves as that of the airtight chambers. The electromagnetic valves are each communicated with the corresponding airtight chambers by means of respective hoses, whereby pressurized air is supplied to and discharged from the airtight chambers through the electromagnetic valves (see Japanese Unexamined Patent Application Publication No. 2000-189477).

### DISCLOSURE OF THE INVENTION:

### PROBLEMS TO BE SOLVED BY THE INVENTION:

Thus, the same number of hoses as that of the airtight chambers is disposed between the pneumatic massage device which a user wears and the massage apparatus body. Therefore, it is troublesome to handle the pneumatic massage apparatus. Moreover, air is exhausted from the airtight chambers through the electromagnetic valves of the massage apparatus body. Therefore, it is difficult to quickly exhaust air due to a flow resistance of the hoses from the airtight chambers to the electromagnetic valves.
It is an object of the present invention to solve the above problems.

### MEANS FOR SOLVING THE PROBLEMS:

The present invention provides a pneumatic human body treating apparatus comprising a pneumatic body treating device which is engaged with a human body to make an effect on a human body while being expanded and contracted by supplying and discharging pressurized air to and from the pneumatic body treating device and, a pneumatic human body treating apparatus main unit separated from the pneumatic body treating device comprising a pressurized air source and being placed adjacent to a user of the pneumatic body treating device, wherein the pneumatic body treating device comprises a plurality of airtight chambers which pressurized air is supplied to and discharged from, a hose having a connecting end connectable to the pressurized air source and electric pressurized air distribution devices which are connected between the hose and respective the airtight chambers for supplying pressurized air from the hose to respective the airtight chambers.

In this pneumatic body treating apparatus, electromagnetic valves are provided with the pneumatic body treating device for making an effect on a human body, whereby it is possible to integrate hoses, which are disposed between the pneumatic body treating apparatus body and the pneumatic body treating device to supply pressurized air from the pressurized air source to the electromagnetic valves, into a single hose.

Specifically, the pneumatic body treating device is a pneumatic massage device which provides a massaging effect while being expanded and contracted by supplying and discharging pressurized air to and from the pneumatic massage device and, the electric pressurized air distribution devices comprises a plurality of electromagnetic valves which are connected between the hose and respective the airtight chambers and which supply pressurized air from the hose to respective the airtight chambers and discharges the pressurized air from respective the airtight chambers.

With the above arrangement, it is possible to reduce the distance from the airtight chamber to the electromagnetic valve in discharging pressurized air from the airtight chamber, whereby a flow resistance can be reduced.

More specifically, the pneumatic body treating apparatus may comprise lead wires for electromagnetic valve control each connected to corresponding one of the electromagnetic valves, extending along the hose to the connecting end of the hose, and terminating at a connecting terminal and, a connector which holds the connecting terminal of the lead wires for electromagnetic valve control and receives a control signal cable extending from an electromagnetic valve controlling unit of the pneumatic human body treating apparatus main unit so as to electrically connect the cable to the connecting terminal.

The present invention also provides a pneumatic human body treating apparatus comprising a pneumatic body treating device which is engaged with a human body to make an effect on a human body while being expanded and contracted by supplying and discharging pressurized air to and from the pneumatic body treating device and, a pneumatic human body treating apparatus main unit separated from the pneumatic body treating device and having a pressurized air source and being placed adjacent to a user of the pneumatic body treating device, wherein the pneumatic body treating device comprises a plurality of airtight chambers which pressurized air is supplied to and discharged from, a plurality of electromagnetic valves which are connected to the airtight chambers and supply pressurized air from the pressurized air source to respective the airtight chambers and, a header for holding the plurality of electromagnetic valves and being connectable to a pressurized air supply hose extending from the pressurized air source to supply pressurized air from the pressurized air source to the electromagnetic valves.

Also in this pneumatic body treating apparatus, the electromagnetic valves are provided with the pneumatic body treating device for making an effect on a human body, whereby it is possible to integrate hoses, which are disposed between the pneumatic body treating apparatus body and the pneumatic body treating device to supply pressurized air from the pressurized air source to the electromagnetic valves, into a single hose. Moreover, contrary to the conventional pneumatic body treating apparatus, pressurized air is discharged from the airtight chamber without passing through the connecting hose extending between the pneumatic massage device and the massage apparatus body. Therefore, it is possible to shorten a flow passage for exhausting pressurized air, whereby a flow resistance of the flow passage can be reduced.

Preferably, the above-described electromagnetic valve used in the pneumatic body treating apparatus according to the present invention comprises a housing having a tubular wall, a first end wall closing one end of the tubular wall, a second end wall closing the other end of the tubular wall, a first opening extending through the first end wall, a second opening extending through the second end wall, and a third opening extending through the tubular wall at a position between the first end wall and the second end wall, an electromagnetic solenoid disposed in the housing so as to be coaxial with the housing and, a displaceable valve which has an armature, a first valve body, and a second valve body, and is displaced in an axial direction of the tubular wall when the armature is attracted to the electromagnetic solenoid, the displaceable valve being displaceable between a first position, where the first opening and the third opening communicate with each other in a state in which the first valve body opens the first opening and the second valve body closes the second opening, and a second position, where the second opening and the third opening communicate with each other in a state in which the first valve body closes the first opening and the second valve body opens the second opening. The second valve body has a flexible valve seat engaging portion formed to extend radially outwardly toward the second opening in a direction in which the displaceable valve is displaced. When the displaceable valve is moved to the second position, the flexible valve seat engaging portion being elastically deformed so as to radially extend by engaging with a valve seat around the second opening, and thus the second valve body moves to a predetermined position close to the valve seat and, the first, second and third openings communicate with the pressurized air source, the airtight chamber, and the atmosphere, respectively.

In this electromagnetic valve, when the displaceable valve is set at the first position, pressurized air is supplied to the airtight chamber through the first opening and the third opening, thereby expanding the pneumatic body treating device. When the displaceable valve is set at the second position, pressurized air supply is interrupted and pressurized air is discharged from the airtight chamber through the third opening and the second opening to the outside, whereby the pneumatic body treating device is contracted.

In this electromagnetic valve, since the second valve body has the above-described flexible valve seat engaging portion, the valve seat engaging portion can be compressed by a large amount when urged against the valve seat.

Generally, a valve seat engaging portion is formed to be annular-shaped so as to engage with the valve seat, and its cross section in the radial direction is semicircular-shaped. In such a configuration, when the valve seat engaging portion engages with the valve seat, the valve seat engaging portion elastically deforms by a certain amount by being urged against the valve seat. However, it is difficult to substantially increase compression amount of the valve seat engaging portion, i.e., an amount in which the valve seat engaging portion elastically deforms by being urged against the valve seat.

To properly supply pressurized air to the airtight chamber, it is necessary to properly close the second opening as an exhaust port. Therefore, it is necessary to increase the size of the electromagnetic solenoid for urging the valve seat engaging portion against the valve seat. As a result, it is difficult to reduce the size of the electromagnetic valve so that the electromagnetic valve can be attached to the above-described pneumatic body treating device and the like.

In the present invention, it is possible to increase the compression amount of the valve seat engaging portion. In other words, with a small urging force, the valve seat engaging portion can engage with the valve seat while being compressively deformed, thereby being able to properly sealingly engage with the valve seat. Thus, it is possible to reduce the size and weight of the electromagnetic solenoid.

Moreover, the electromagnetic solenoid is housed in the housing, which also contributes to reducing the size of the electromagnetic valve.

Further, when this electromagnetic valve is operated, pressurized air flows through the housing in which the electromagnetic solenoid and the displaceable valve are housed. Therefore, the electromagnetic valve can be compulsory cooled, and collision sound of the armature can be restrained from leaking to the outside.

Thus, this electromagnetic valve is suitable for the pneumatic body treating device which is worn on a human body.

More specifically, the electromagnetic valve has a spring member which biases the displaceable valve toward the second position, the displaceable valve has a rod extending through a through hole of the electromagnetic solenoid formed along an axis thereof. The armature is secured to the rod on the side of the first valve body with respect to the electromagnetic solenoid. When the electromagnetic solenoid is energized, the armature is attracted to and engaged with an end surface of the electromagnetic solenoid, whereby the displaceable valve is set at the first position.

When the electromagnetic solenoid is operated and then the armature is attracted toward the electromagnetic solenoid, and if the armature is stopped at a position apart from the end surface of the electromagnetic solenoid without engaging with the end surface of the electromagnetic solenoid, a magnetic attrtreating force of the electromagnetic solenoid treating on the armature does not reach its maximum value. Therefore, there is a possibility that the displaceable valve may be pushed back by a reaction force. Accordingly, it is desirable that the armature engages with the end surface of the electromagnetic solenoid in a state in which the displaceable valve is set at the first position and the second valve body engages with the valve seat. However, it is difficult to set the armature in such a desirable state due to accumulation of manufacturing tolerances in assembling of the armature, the displaceable valve body, and the like. Generally, in this case, the electromagnetic solenoid has to be large-sized to increase magnetic attracting force treating on the armature so that a compression amount of the valve seat engaging portion of the second valve body is increased when the valve seat engaging portion is urged against the valve seat. Thus, the accumulation of manufacturing tolerances is compensated.
On the contrary, with the above-described valve seat engaging portion of the second valve body, the armature can engage with the end surface of the electromagnetic solenoid when the displaceable valve is set at the first position, without increasing the size of the electromagnetic solenoid.

### ADVANTAGEOUS EFFECTS OF THE INVENTION:

With the above-described arrangement of the pneumatic body treating apparatus according to the present invention, it is not necessary to connect the pneumatic body treating device and the pressurized air source of the pneumatic body treating apparatus body by means of a plurality of hoses. Moreover, if the electromagnetic valve is provided with an exhausting function, an exhaust flow resistance from the airtight chamber to the electromagnetic valve can be reduced, whereby air can be exhausted quickly. Further, with the above-described arrangement of the electromagnetic valve, it is possible to reduce the size, weight, and operation noise of the pneumatic body treating device so that a user can comfortably use the pneumatic body treating device.

### BRIEF DESCRIPTION OF THE DRAWINGS:

FIG. 1 is a schematic diagram of a pneumatic massage apparatus according to an embodiment of the present invention.
FIG. 2 is a sectional view of a connecting hose which connects a massage apparatus body and a pneumatic massage device in the massage apparatus in FIG. 1.
FIG. 3 is a sectional view of a three-way electromagnetic valve used in the massage apparatus in FIG. 1, showing a state in which pressurized air is supplied from a pump.
FIG. 4 is a cross-sectional view of FIG. 5 taken along line IV-IV.
FIG. 5 is a view similar to FIG. 3, showing a state in which pressurized air supply from the pump is interrupted and pressurized air is exhausted from a airtight chamber of the massage device.
FIG. 6 is a schematic diagram of another embodiment of the pneumatic massage apparatus according to the present invention.

### EXPLANATION OF REFERENCE SYMBOLS:

- 10: massage apparatus (pneumatic body treating apparatus)
- 12: pneumatic massage device (pneumatic body treating device)
- 14: massage apparatus body (pneumatic body treating apparatus body)
- 16, 18, 20, 22: airtight chamber
- 16', 18', 20', 22': airtight chamber
- 21: hose
- 24, 26, 28, 30: electromagnetic valve (pressurized air distribution means)
- 24', 26', 28', 30': lead wire for electromagnetic valve control
- 31: connecting unit
- 32: cover
- 42: housing
- 44: electromagnetic solenoid
- 46: displaceable valve
- 48: tubular wall
- 50: first end wall
- 52: second end wall
- 54: first opening
- 56: second opening
- 58: third opening
- 60: tubular check valve
- 62: housing
- 64: pump communication port
- 66: conical check valve member
- 68: coil retaining wall
- 70: air passage
- 72: rod
- 74: armature
- 76: first valve body
- 78: second valve body
- 80: flange
- 82: valve body holding member
- 84: valve member
- 86: valve seat engaging portion
- 88: valve body holding member
- 89: spring retaining portion
- 90: compression spring
- 92: valve member
- 94: valve seat engaging portion
- 148: pressurized air source (air pump)
- 150: tank
- 152: control circuit
- 154: connecting hose
- 155: control signal cable
- 156: header
- 158, 160, 162, 164: electromagnetic valve
- 158', 160', 162', 164': hose

### BEST MODE FOR CARRYING OUT THE INVENTION:

Embodiments of a pneumatic massage apparatus according to the present invention will now be described with reference to the accompanying drawings.

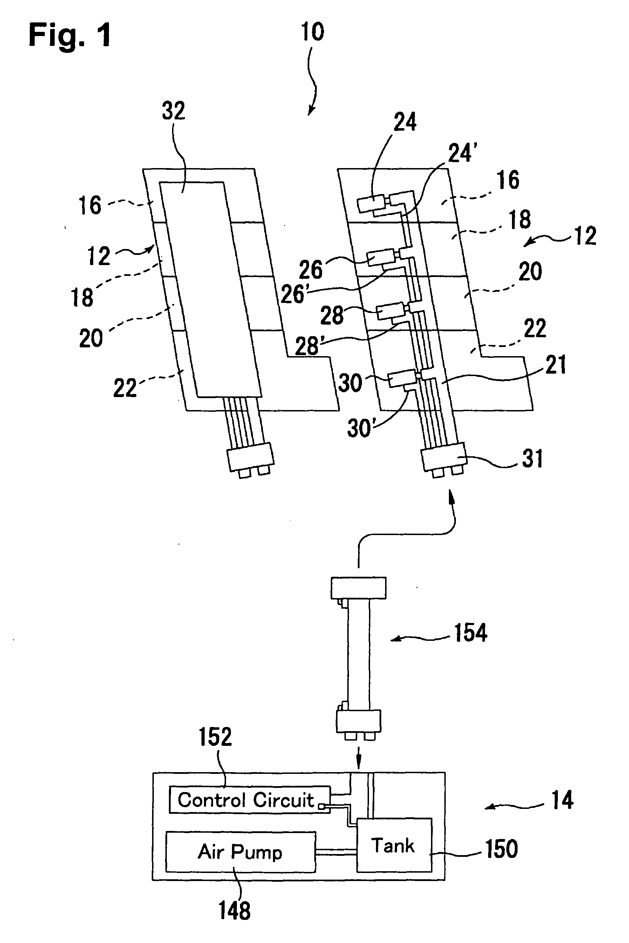

FIG. 1 schematically shows a pneumatic massage apparatus 10 according to a first embodiment of the present invention. The pneumatic massage apparatus 10 has a pair of pneumatic massage devices worn around the left and right lower limbs of a user, and a massage apparatus body 14 placed on a floor or the like adjacent to the user wearing the pneumatic massage devices.

The inside of the pneumatic massage device 12 is divided into a plurality of airtight chambers 16, 18, 20, and 22. The airtight chambers are expanded and contracted by supplying and discharging pressurized air to and from the airtight chambers, whereby the pneumatic massage device provides a massaging effect on the user. As shown in the right one of the pneumatic massage devices 12 in FIG. 1, the pneumatic massage device is provided, on a surface thereof, with a hose 21 having a connecting end (the lower end as viewed in the figure) connectable to a pressurized air source of the massage apparatus body 14, and a plurality of electromagnetic valves 24, 26, 28, and 30 connected between the hose 21 and the airtight chambers 16, 18, 20, and 22, respectively. The electromagnetic valves are each adapted to supply pressurized air to the corresponding airtight chambers from the hose 21, hold the pressurized air, and discharge the pressurized air from the corresponding airtight chambers. Lead wires 24', 26', 28', and 30' for electromagnetic valve control extend from the electromagnetic valves 24, 26, 28, and 30, respectively, along the hose 21 to the connecting end of the hose 21 which is connected to the pressurized air source, ending at a control signal receiving terminal (not shown). In the illustrated example, the connecting end of the hose 21 and the control signal receiving terminal of the lead wires for electromagnetic valve control are combined and held by a connecting unit 31. As shown in the left one of the massage devices 12 in FIG. 1, the massage device 12 is provided with a cover 32 for covering the hose 21 and the electromagnetic valves 24, 26, 28, and 30 such that the hose and the electromagnetic valves are not seen from the outside. In the right one of the pneumatic massage apparatus in FIG. 1, the cover 32 is not shown in order to clearly show the relationship among the airtight chambers 16, 18, 20, and 22, the hose 21, the electromagnetic valves 24, 26, 28, and 30, and the lead wires 24', 26', 28', and 30' for electromagnetic valve control.

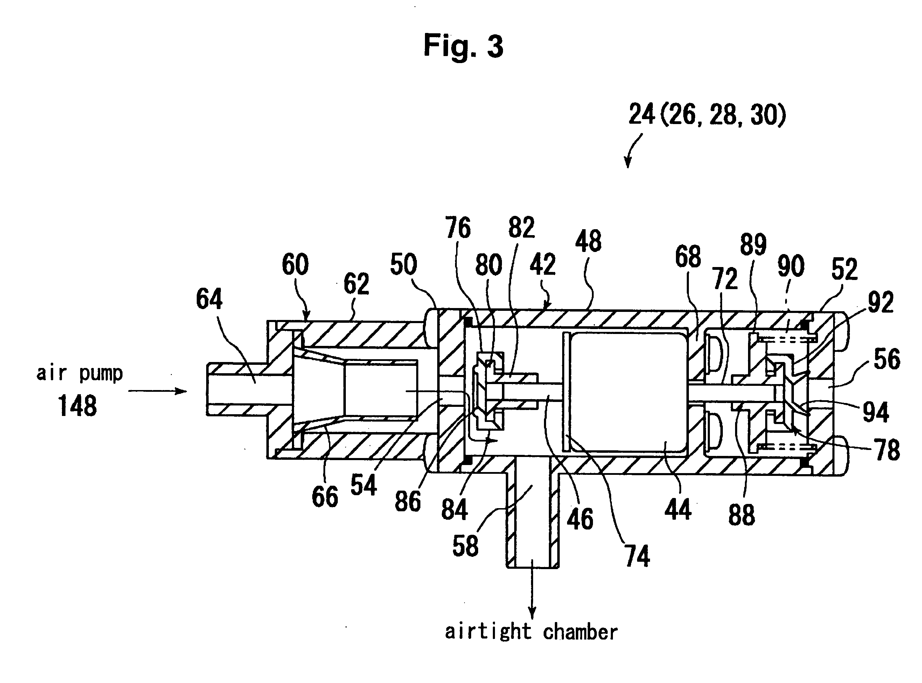

As shown in Fig. 3, the electromagnetic valves 24, 26, 28, and 30 each have a tubular housing 42, an electromagnetic solenoid 44 disposed in the housing 42, and a displaceable valve 46 disposed in the housing 42 and being displaceable in an axial direction of the housing by the action of the electromagnetic solenoid. The housing 42 has a tubular wall 48, a first end wall 50, and a second end wall 52. The first end wall 50, the second end wall 52, and the tubular wall 48 are provided with a first opening 54, a second opening 56, and a third opening 58, respectively, penetrating therethrough. In the illustrated example, a check valve 60 is attached to the first end wall 50 of the housing 42, and the first opening 54 is adapted to communicate with a pump through the check valve 60. The check valve 60 has a tubular housing 62 coaxially connected to the housing 42, and a conical check valve member 66 made of flexible material such as rubber and coaxially attached to a pump communication port 64 provided in the end wall of the tubular housing 62.

The first opening 54 communicates with the pump of the massage apparatus through the check valve 60, the third opening 58 communicates with the airtight chamber which expands and contracts the massage device by supplying and discharging pressurized air by means of the pump, and the second opening 56 communicates with the atmosphere.

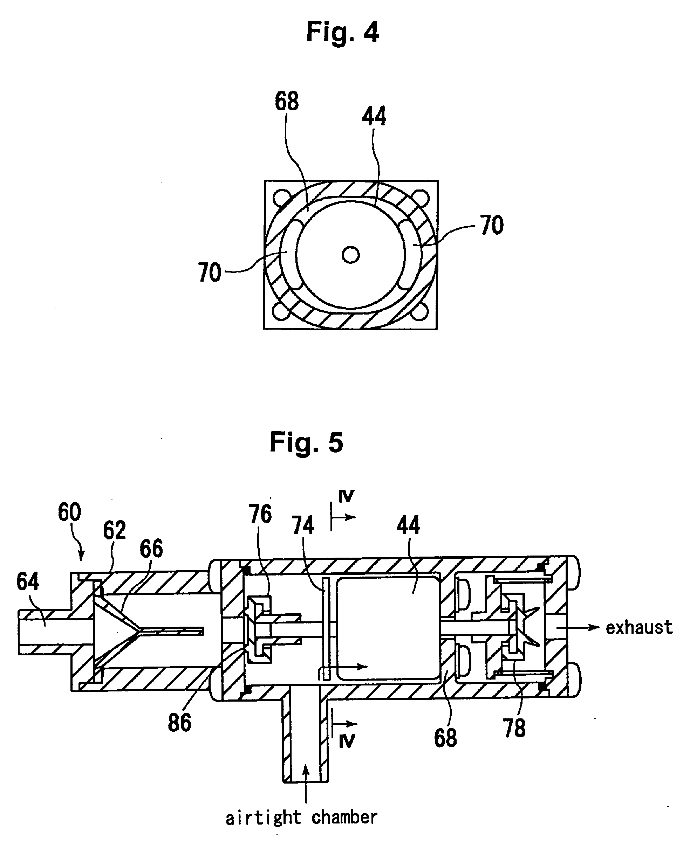

The housing 42 has an annular coil retaining wall 68 formed on the inner surface of the tubular wall 48, and the electromagnetic solenoid 44 is secured to the coil retaining wall so as to be coaxial with the housing 42. As shown in FIG. 4, the coil retaining wall 68 is provided with a pair of air passages 70 passing therethrough.

The displaceable valve 46 has a rod 72 extending through a through hole extending along an axis of the electromagnetic solenoid, a disc-shaped armature 74 made of magnetic material such as steel and secured to the rod 72 on the first opening 54 side with respect to the electromagnetic solenoid 44, a first valve body 76 disposed at one end of the rod 72, and a second valve body 78 disposed at the other end of the rod 72. The first valve body 76 has a tubular valve body holding member 82 engaging with the one end of the rod 72 and having at the left end thereof a flange 80, and a generally disc-shaped valve member 84 engaging with the flange 80 and made of flexible material such as rubber. The valve member 84 has a valve seat engaging portion 86 annularly protruding from a surface thereof facing to the first opening 54 and having a generally semicircular-shaped cross section in the radial direction. The second valve body 78 has a valve body holding member 88 similar to the valve body holding member 82 of the first valve body 76. The valve body holding member 88 is provided with a spring retaining portion 89 which retains a compression spring 90 against the second end wall 52, thereby biasing the displaceable valve 46 against the first end wall. The second valve body 78 also has a valve member 92 similar to the valve member 84 of the first valve body 76. The valve member 92 is provided, on a surface thereof facing to the second end wall 52, with a conical valve seat engaging portion 94 radially outwardly extending toward the second end wall 52.

The electromagnetic valves 24, 26, 28, and 30 have the above-described arrangement. As shown in FIG. 5, when the electromagnetic solenoid 44 is not electrified, the displaceable valve 46 is urged by the compression spring 90, whereby the valve seat engaging portion 86 of the first valve body 76 is urged against the first end wall 50 to close the first opening 54 and the second valve body 78 is moved apart from the second end wall 52 to open the second opening 56. Therefore, in this state, pressurized air supply from the pump is interrupted, and pressurized air in the airtight chamber of the massage apparatus is exhausted through the third opening 58 and the second opening 56.

On the other hand, when the electromagnetic solenoid 44 is electrified, the armature 74 is attracted to an end surface of the electromagnetic solenoid 44 by means of a magnetic force generated by the electrification of the electromagnetic solenoid 44, thereby moving the displaceable valve 46 toward the second end wall (see FIG. 3). In this state, the annular valve seat engaging portion 94 of the second valve body 78 is urged against the second end wall 52 inner surface (i.e., valve seat) around the second opening 56 while being elastically deformed to close the second opening 56, and the first valve body 76 is moved apart from the first end wall 50 to open the first opening 54. Therefore, in this state, pressurized air is supplied from the pump through the first opening 54 and the third opening 58 to the airtight chamber of the massage apparatus.

The displaceable valve 46 is reciprocated by periodical electrification of the electromagnetic solenoid 44, whereby pressurized air is periodically supplied to and exhausted from the airtight chamber of the massage apparatus. The check valve member 60 prevents pressurized air from flowing back toward the pump.

The massage apparatus body 14 has an air pump 148 as a pressurized air source, a tank 150 for reducing pulsation of pressurized air supplied from the air pump, and a control circuit 152 for controlling the electromagnetic valves 24, 26, 28, and 30.

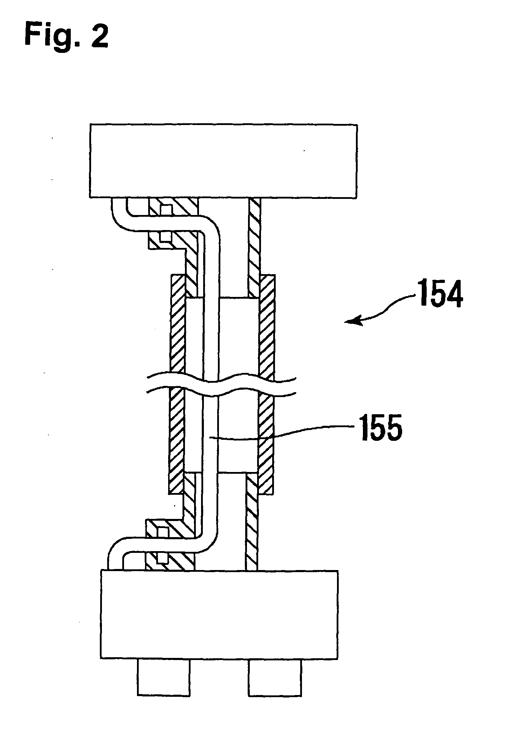

The massage apparatus body 14 is connected to each pneumatic massage device 12 by means of a connecting hose 154 (a hose only for the right one of the pneumatic massage devices 12 is shown in FIG. 1). Pressurized air is supplied through the connecting hose 154 to the hose 21 of the pneumatic massage device. As shown in Fig. 2, an electromagnetic valve control signal is sent from the control circuit 152 to the lead wires for control valve control through a control signal cable 155 passing through the connecting hose.

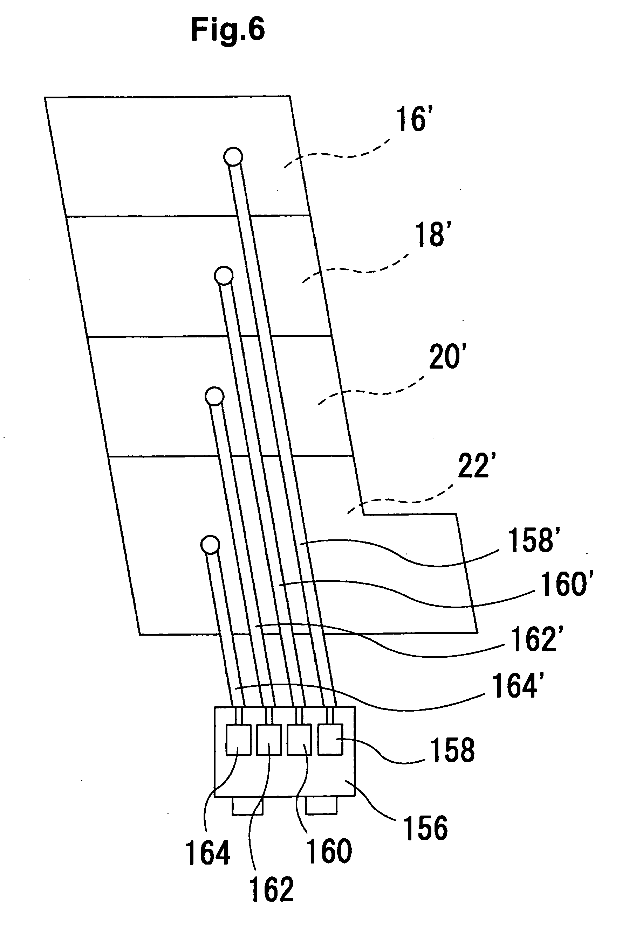

FIG. 6 shows another embodiment of the pneumatic massage device.
This pneumatic massage device includes a header 156 communicating with a pressurizing air source, and a plurality of electromagnetic valves 158, 160, 162, and 164 which communicate with the header and airtight chambers 16', 18', 20', and 22', respectively, and which supply pressurized air to the corresponding airtight chambers, hold the pressurized air, and discharge the pressurized air from the corresponding airtight chambers. The electromagnetic valves may have substantially the same structure as the above-described electromagnetic valves 24, 26, 28, and 30. The electromagnetic valves 158, 160, 162, and 164 communicate with the airtight chambers 16', 18', 20', and 22' through hoses 158', 160', 162', and 164', respectively, attached on a surface of the pneumatic massage device. The header 156 is connected to a massage apparatus body by means of a connecting hose (not shown) similar to the connecting hose 154 of the first embodiment, and the electromagnetic valves are controlled based on control signals sent from the control circuit of the massage apparatus body, whereby pressurized air is supplied to and exhausted from the corresponding airtight chambers.

Although the embodiments of the massage apparatus according to the present invention have been described above, the present invention is not necessarily limited to the foregoing embodiments. For example, the massage device according to the present invention is not limited to a device which is worn on a human body, but may be used as a mat type massage device disclosed in Japanese Examined Patent Application Publication No. 60-50459, or as a bedsore prevention device disclosed in Japanese Examined Utility Model Registration Application Publication No. 3-54735. Moreover, although the connecting hose 154 is used in the illustrated example, the hose 21 and the lead wires for electromagnetic valve control may be extended by a length corresponding to that of the connecting hose 154 to be held together by the connecting unit 31 so that the connecting terminal 31 is directly connected to the massage apparatus body 14. Further, the first valve body 76 of the electromagnetic valve may have a conical valve seat engaging portion similar to that of the second valve body 78. Conversely, the second valve body 78, like the first valve body 76, may be formed to have a generally semicircular-shaped cross section in the radial direction.

## Claims

1. A pneumatic human body treating apparatus, comprising:
a pneumatic body treating device which is engaged with a human body to make an effect on a human body while being expanded and contracted by supplying and discharging pressurized air to and from said pneumatic body treating device; and,
a pneumatic human body treating apparatus main unit separated from said pneumatic body treating device, said pneumatic human body treating apparatus main unit comprising a pressurized air source and being placed adjacent to a user of said pneumatic body treating device,
wherein said pneumatic body treating device comprises:
a plurality of airtight chambers which pressurized air is supplied to and discharged from;
a hose having a connecting end connectable to said pressurized air source; and,
electric pressurized air distribution devices which are connected between said hose and respective said airtight chambers for supplying pressurized air from said hose to respective said airtight chambers.

2. A pneumatic human body treating apparatus, wherein:
said pneumatic body treating device is a pneumatic massage device which provides a massaging effect while being expanded and contracted by supplying and discharging pressurized air to and from said pneumatic massage device; and,
said electric pressurized air distribution devices comprises a plurality of electromagnetic valves which are connected between said hose and respective said airtight chambers and which supply pressurized air from said hose to respective said airtight chambers and discharges said pressurized air from respective said airtight chambers.

3. A pneumatic body treating apparatus according to claim 2, wherein said pneumatic massage device comprises:
lead wires for electromagnetic valve control each connected to corresponding one of said electromagnetic valves, extending along said hose to said connecting end of said hose, and terminating at a connecting terminal; and,
a connector which holds said connecting terminal of said lead wires for electromagnetic valve control and receives a control signal cable extending from an electromagnetic valve controlling unit of said pneumatic human body treating apparatus main unit so as to electrically connect said cable to said connecting terminal.

4. A pneumatic human body treating apparatus comprising:
a pneumatic body treating device which is engaged with a human body to make an effect on a human body while being expanded and contracted by supplying and discharging pressurized air to and from said pneumatic body treating device; and,
a pneumatic human body treating apparatus main unit separated from said pneumatic body treating device, said pneumatic human body treating apparatus main unit having a pressurized air source and being placed adjacent to a user of said pneumatic body treating device,
wherein said pneumatic body treating device comprises:
a plurality of airtight chambers which pressurized air is supplied to and discharged from;
a plurality of electromagnetic valves which are connected to said airtight chambers and supply pressurized air from said pressurized air source to respective said airtight chambers; and,
a header for holding said plurality of electromagnetic valves and being connectable to a pressurized air supply hose extending from said pressurized air source to supply pressurized air from said pressurized air source to said electromagnetic valves.

5. A pneumatic body treating apparatus according to any one of claims 2 to 4, wherein:
said electromagnetic valve comprises:
a housing having a tubular wall, a first end wall closing one end of said tubular wall, a second end wall closing the other end of said tubular wall, a first opening extending through said first end wall, a second opening extending through said second end wall, and a third opening extending through said tubular wall at a position between said first end wall and said second end wall;
an electromagnetic solenoid disposed in said housing so as to be coaxial with said housing; and,
a displaceable valve which has an armature, a first valve body, and a second valve body, and is displaced in an axial direction of said tubular wall when said armature is attracted to said electromagnetic solenoid, said displaceable valve being displaceable between a first position, where said first opening and said third opening communicate with each other in a state in which said first valve body opens said first opening and said second valve body closes said second opening, and a second position, where said second opening and said third opening communicate with each other in a state in which said first valve body closes said first opening and said second valve body opens said second opening;
said second valve body has a flexible valve seat engaging portion formed to extend radially outwardly toward said second opening in a direction in which said displaceable valve is displaced, and when said displaceable valve is moved to said second position, said flexible valve seat engaging portion being elastically deformed so as to radially extend by engaging with a valve seat around said second opening, and thus said second valve body moves to a predetermined position close to said valve seat; and,
said first, second and third openings communicate with said pressurized air source, atmosphere, and said airtight chamber, respectively.

6. A pneumatic body treating apparatus according to claim 5, wherein:
said electromagnetic valve has a spring member which biases said displaceable valve toward said second position;
said displaceable valve has a rod extending through a through hole of said electromagnetic solenoid formed along an axis thereof; and
said armature is secured to said rod on the side of said first valve body with respect to said electromagnetic solenoid, and when said electromagnetic solenoid is energized, said armature is attracted to and engaged with an end surface of said electromagnetic solenoid, whereby said displaceable valve is set at said first position.
